# EUROPÄISCHE PATENTSCHRIFT

(11) **EP 1 371 619 B1**
(45) Veröffentlichungstag und Bekanntmachung des Hinweises auf die Patenterteilung: **19.07.2006**
(21) Anmeldenummer: 03012648.6
(22) Anmeldetag: 04.06.2003
(51) Int. Cl.: C04B 18/26, C04B 28/10, C04B 28/30, C04B 14/36, C04B 41/50, E04B 1/94

(54) **Bauelement**
Building element
Elément de construction

(30) Priorität: 15.06.2002 DE 10226784
(43) Veröffentlichungstag der Anmeldung: 17.12.2003
(73) Patentinhaber: HERAKLITH AG, 9702 Ferndorf (AT)
(72) Erfinder: Tschernuth, Christof, 9500 Villach (AT); Gräf, Gerd, 84375 Kirchdorf (DE)
(74) Vertreter: Becker, Thomas

(56) Entgegenhaltungen:
- DE-A1- 10 006 041
- GB-A- 2 308 592

## Beschreibung

Die Erfindung betrifft ein Bauelement auf Basis von Holzwollefasern, die untereinander über ein anorganisches Bindemittel unter Ausbildung einer insgesamt offenporigen Struktur verbunden sind.

Bauelemente dieser Art sind seit über 100 Jahren bekannt. Man bezeichnet sie als sogenannte Holzwolle-Leichtbauelemente (nachstehend auch HWL-Elemente genannt), die insbesondere unter der Marke "Heraklith" der Anmelderin vertrieben werden.

Die Bauelemente sind in verschiedenen Größen, Formen und Konfektionierungen, zum Teil auch als Verbund-Elemente, beispielsweise mit Mineralfaser-Schichten, im Handel erhältlich. Sie haben sich uneingeschränkt bewährt.

Die Rohdichte der bekannten HWL-Elemente beträgt üblicherweise bis 350 kg/m³, nach DIN 1102 geht der Rohdichte-Bereich bis mindestens 570 kg/m³, je nach dem Volumenanteil an Freiräumen zwischen den Feststoffanteilen des Bauelementes.

Die Holzwolle-Fasern weisen üblicherweise eine Länge von mehr als 8 cm, eine Breite von 1 - 5 mm und eine Dicke von 0,2 bis 0,5 mm auf.

Neben dem Gesamtanteil an offener Porosität innerhalb des Bauelementes (die Freiräume können beispielsweise zwischen 50 und 80 Vol.% betragen) weist auch die einzelne Holzfaser eine erhebliche offene (Mikro) Porosität (sogenannte Zellen) auf. Daraus ergibt sich eine relativ große Oberfläche der einzelnen Fasern, wodurch eine Verbindung der Fasern mit Hilfe des genannten Bindemittels erleichtert wird. Man spricht von einer "Inkrustierung" der Fasern durch das Bindemittel, also einer Art Oberflächenbeschichtung der Faser durch das Bindemittel. Üblicherweise handelt es sich um ein hydraulisches Bindemittel, beispielsweise ein magnesitisches Bindemittel, welches mit Wasser angemacht und in viskoser Form zwischen das unregelmäßig dreidimensional verteilte Gerüst an Holzwollefasern eingebracht wird und beim Abbinden die einzelnen Fasern untereinander festlegt.

Die DIN 4102 (ISO 1182) unterteilt derartige Bauteile in A - nichtbrennbare Baustoffe - mit den Unterklassen A1 - Stoffe, die überhaupt nicht brennbar sind und A2 - Stoffe, welche nur geringfügig brennbar sind -, den Brand aber nicht weiter aufrechterhalten.

Mit der Erfindung soll ein Bauelement der bekannten Art hinsichtlich seines Brandverhaltens so ausgebildet werden, dass er den Anforderungen der Klasse A 2 genügt. Dabei wird bereits an dieser Stelle vorausgeschickt, dass der prinzipielle Aufbau des Bauelementes hinsichtlich seiner Bestandteile Holzwollefasern und Bindemittel uneingeschränkt von bekannten Maßnahmen aus dem Stand der Technik Gebrauch machen kann, so dass diese nachstehend nicht weiter beziehungsweise erneut beschrieben werden.

Es ist bereits vorgeschlagen worden, die Zellenstruktur der Holzwollefasern auszunutzen, um die Holzwollefasern zumindest teilweise mit einem flüssigen Flammschutzmittel zu imprägnieren (Siehe zum Beispiel DE 100 06 041 A1).

Die Erfindung geht einen anderen Weg: Sie verwendet Zusatzstoffe, die unter Wärmeeinwirkung (also im Brandfall) expandieren beziehungsweise aufschäumen.

Damit will die Erfindung vor allen Dingen gefährlichen Schwel- und Glimmbränden entgegentreten. Diese Brände, die oft lange unerkannt bleiben und große Schäden anrichten können entstehen häufig unter folgenden Voraussetzungen:
- Das Material besteht zumindest teilweise aus organischen Bestandteilen und ist trocken,
- das Material ist nicht kompakt beziehungsweise massiv, sondern enthält insbesondere geschlossene Poren/Hohlräume, die eine schnelle Wärmeabfuhr verhindern,
- eine Zündquelle wirkt längere Zeit auf das Material ein oder kann in das Material eindringen.

Die Verwendung eines expandierenden Materials als Zusatzmittel, welches mehr oder weniger homogen im Bauelement verteilt ist, soll dafür sorgen, dass dann, wenn eine gewisse Temperatur erreicht ist, dieses Material eine deutliche Volumensvergrößerung ausführt, und zwar möglichst rasch (schlagartig).

Solche Stoffe sind als sogenannte Intumeszenzbildner bekannt, das sind Stoffe, die unter Wärmeinwirkung ihre Oberfläche vergrößern.

Aufgrund der Expansion kann es, je nach der genauen Stelle, an der sich der Wärmeherd befindet, zu einer erheblichen Druckerhöhung kommen, die zu einem Absprengen darüberliegender Abschnitte des Bauelementes führen können. Dies wird erfindungsgemäß nicht nur in Kauf genommen, sondern gewünscht, um zu verhindern, dass sich der gefährliche Glimm- oder Schwelbrand weiter ausbreitet. Es können nun zwei Effekte auftreten:
- Es kann zu einer "offenen Flamme" kommen; der Brand wird jetzt zumindest erkannt und kann - beispielsweise konventionell - gelöscht werden.
- Die Expansion des Zusatzmittels kann aber auch zur Ausbildung einer Art Sperrschicht führen. In den kühleren Bereichen, wo die Flamme nicht unmittelbar einwirkt, expandiert das Zusatzmittel und sprengt noch nicht zerstörte Holzwollefasern ab. Auf diese Weise entsteht eine Art Schaumbarriere, die ein Weiterwandern eines Schwelnestes verhindert.

In ihrer allgemeinsten Ausführungsform betrifft die Erfindung danach ein Bauelement auf Basis Holzwollefasern, die untereinander über ein anorganisches Bindemittel unter Bildung einer offenporigen Struktur verbunden sind, mit einem Gehalt eines Intumeszenzbildners zwischen 1 und 25 Gew.%, bezogen auf die Masse des Bindemittels der überwiegend im und/oder auf dem Binde mittel verteilt angeordnet ist.

Im Fulle der Intumeszenzbildner überwiegend im Bindemittel verteilt angeordnet ist, wird er beispielsweise bei der Aufbereitung des Bindemittels eingemischt welches anschließend auf bekannte Art und Weise weiter verarbeitet wird.

Im Falle der Intumeszenzbildner überwiegend auf dem Bindemittel verteilt angeordnet ist, kann beispielsweise ein fertiges Bauelement in einer entsprechenden flüssigen Aufbereitung des Intumeszenzbildners "geflutet" (getaucht) werden. "Überwiegend" bedeutet jeweils: "zu mehr als der Hälfte"; beispielsweise > 60, > 70, > 80 oder > 90 Gew.%.

Die Verteilung im Bindemittel ist einfach. Der Bildner kann trocken verwendet werden. Beispielsweise eignet sich hier expandierbarer Graphit, expandierbarer Perlit oder expandierbarer Vermikulit.

Die Verteilung des Intumeszenzbildners in flüssiger Form auf den Oberflächen und im Inneren des offenporigen Bauelementes nach dessen Herstellung hat den Vorteil, dass es während der Trocknung des flüssigen Intumeszenzbildners zu einer weiteren Härtung der Platte kommt und sich im Brandfall die Expansion langsamer entwickelt. Es kommt also nicht zu der vorbeschriebenen "Sprengwirkung", wie sie beobachtet wurde, wenn der Intumeszenzbildner (homogen) im Bindemittel verteilt vorliegt. Vielmehr bildet sich der Druck langsam und gleichmäßig über den gesamten Querschnitt des Bauelementes auf und es bildet sich ein Kohlenstoffschaum, der einen guten Brandschutz bietet. Der entstehende Kohlenstoffschaum führt sogar innerhalb des Bauelementes zu einer Art "Stützgerüst", welches die Stabilität des Bauelementes erhöht.

Das Bindemittel kann wie bei üblichen HWL-Elementen ein magnesitisches Bindemittel sein.

Die Menge des Intumeszenzbildners richtet sich nach dessen Art und Ein-/Aufbringung, insbesondere, ob er trocken oder flüssig eingesetzt wird.

Nach einer Ausführungform beträgt die Menge des Zusatzmittels 2 bis 12 Gew.%, bezogen auf die Masse des Bindemittels, nach einer weiteren Ausführungsform 4 bis 10 Gew.%.

Ein geeigneter Intumeszenzbildner welcher in wässriger flüssiger Aufbereitung zum Fluten eines Bauelementes verwendet werden kann, ist Guanidinphosphat, welches unter dem Produktnamen Nopyron OP im Markt erhältlich ist.

Das Gewichtsverhältnis Holzwolle/Bindemittel liegt üblicherweise zwischen 0,15 und 0,25, nach einer Ausführungsform zwischen 0,18 und 0,22. Die Dichte des Bauelementes beträgt nach einer Ausführungsform zwischen 300 und 700 kg/m³ und kann 400 bis 600 kg/m³ betragen.

Die Bauelemente eignen sich zur Erstellung von nichtbrennbaren Brandwänden mit einer Feuerwiderstandsdauer von ≥ F 90 A, als Bestandteil feuerbeständiger Akustikdecken (F 90 A) zur Bekleidung von Lüftungsleitungen mit einer Feuerwiderstandsdauer von ≥ L 60 A sowie zur Verkleidung beziehungsweise zum Bau von Kabelschächten. Ebenso ist die Verwendung in Brandschutztüren denkbar. Die vorgenannten Anwendungen sind beispielhaft und nicht beschränkend.

Die Feuerwiderstandsklassen sind in der DIN 4102 weiter definiert.

Wie bereits erwähnt kann das Bauelement in beliebiger Geometrie konfektioniert werden. Eine Hauptform ist die einer Platte, beispielsweise in den Abmessungen einer konventionellen HWL-Platte (600 x 2000 mm).

Das Bauelement kann auch als Verbundbauteil konfektioniert werden, mit mindestens einer weiteren Schicht, die sich in ihrer materialmäßigen (werkstoffmäßigen) Zusammensetzung vom Rest des Bauelementes unterscheidet. Diese weitere Schicht kann beispielsweise eine Mineralfaserschicht, eine anorganische monolitische Schicht oder dergleichen sein.

## Patentansprüche

1. Bauelement auf Basis Holzwollefasern, die untereinander über ein anorganisches Bindemittel unter Bildung einer offenporigen Struktur verbunden sind, mit einem Gehalt eines Intumeszenzbildners zwischen 1 und 25 Gew.%, bezogen auf die Masse des Bindemittels, der überwiegend im und/oder auf dem Bindemittel verteilt angeordnet ist.

2. Bauelement nach Anspruch 1 mit einem magnesitischen Bindemittel.

3. Bauelement nach Anspruch 1 mit einem Gehalt des Intumeszenzbildners zwischen 2 und 12 Gew.%.

4. Bauelement nach Anspruch 1 mit einem Gehalt des Intumeszenzbildners zwischen 4 und 10 Gew.%.

5. Bauelement nach Anspruch 1 mit mindestens einem Intumeszenzbildner aus der Gruppe: expandierbarer Graphit, expandierbarer Perlit, expandierbarer Vermikulit, Phosphat.

6. Bauelement nach Anspruch 5, bei dem das Phosphat ein Guanidinphosphat ist.

7. Bauelement nach Anspruch 1 mit einem Holzwolle/Bindemittel-Gewichtsverhältnis zwischen 0,15 und 0,25.

8. Bauelement nach Anspruch 1 mit einer Dichte zwischen 300 und 700 kg/m³.

9. Bauelement nach Anspruch 1, konfektioniert als Verbundbauteil mit mindestens einer weiteren Schicht, die sich in ihrer materialmäßigen Zusammensetzung vom Rest des Bauelementes unterscheidet.

## Claims

1. A structural element based on wood wool fibres, which are bonded together by means of an inorganic bonding agent so as to form an open-pore structure, having a content of an intumescent agent of between 1 and 25 wt.% relative to the mass of the bonding agent, said intumescent agent being distributed predominantly in and/or on the bonding agent.

2. A structural element according to claim 1 having a magnesitic bonding agent.

3. A structural element according to claim 1 having a content of intumescent agent of between 2 and 12 wt.%.

4. A structural element according to claim 1 having a content of intumescent agent of between 4 and 10 wt.%.

5. A structural element according to claim 1 having at least one intumescent agent from the group: expandable graphite, expandable perlite, expandable vermiculite, phosphate.

6. A structural element according to claim 5, in which the phosphate is a guanidine phosphate.

7. A structural element according to claim 1 having a wood wool/bonding agent weight ratio of between 0.15 and 0.25.

8. A structural element according to claim 1 having a density of between 300 and 700 kg/m³.

9. A structural element according to claim 1, assembled as a composite building component having at least one further layer, which differs from the rest of the structural element in its material composition.

## Revendications

1. Élément de construction à base de fibres de laine de bois, qui sont reliées entre elles par l'intermédiaire d'un liant anorganique en formant une structure à pores ouverts, contenant un générateur d'intumescence qui a une teneur entre 1 et 25 % en poids par rapport à la masse de liant et qui est réparti principalement dans et/ou sur le liant.

2. Élément de construction selon la revendication 1, contenant un liant à base de magnésie.

3. Élément de construction selon la revendication 1, ayant une teneur en générateur d'intumescence entre 2 et 12 % en poids.

4. Élément de construction selon la revendication 1, ayant une teneur en générateur d'intumescence entre 4 et 10 % en poids.

5. Élément de construction selon la revendication 1, contenant au moins un générateur d'intumescence issu du groupe : graphite expansible, perlite expansible, vermiculite expansible, phosphate.

6. Élément de construction selon la revendication 5, dans lequel le phosphate est un phosphate à base de guanidine.

7. Élément de construction selon la revendication 1, ayant un rapport de poids laine de bois/liant entre 0,15 et 0,25.

8. Élément de construction selon la revendication 1, ayant une densité entre 300 et 700 kg/m³.

9. Élément de construction selon la revendication 1, réalisé sous forme d'élément composite comportant au moins une couche supplémentaire, qui se différencie du reste de l'élément de construction par la composition de son matériau.
